# EUROPÄISCHE PATENTANMELDUNG

(11) **EP 2 675 044 A2**
(43) Veröffentlichungstag der Anmeldung: **18.12.2013**
(21) Anmeldenummer: 13171276.2
(22) Anmeldetag: 10.06.2013
(51) Int. Cl.: H02K 7/06

(54) **Verstellvorrichtung**

(30) Priorität: 12.06.2012 DE 102012105075
(71) Anmelder: Kokinetics GmbH, 65830 Kriftel (DE)
(72) Erfinder: Dietz, Horst, 67727 Lohnsfeld (DE)
(74) Vertreter: Weiss, Peter

(57) **Zusammenfassung**

Verstellvorrichtung mit einem Motor (2), einem Stator (3) und einem Rotor (4) sowie einem zwischen dem Stator (3) und dem Rotor (4) angeordnetes Drehgleitelement (27.1, 27.2, 27.3), wobei das Drehgleitelement (27.1, 27.2, 27.3) zumindest ein Drehgleitführungselement (23, 24) umfasst, welches auf einer dem Drehgleitelement (27.1, 27.2), 27.3 zugewandten Innenseite des Stators (3) und/oder Rotors (4) angeordnet ist und in zumindest einer Drehgleitführungsnut (25, 26) geführt ist, welche auf einer der Innenseite des Stators (3) und/oder Rotors (4) zugewandten Oberfläche des Drehgleitelementes (27.1, 27.2, 27.3) eingebracht ist.

## Beschreibung

Die vorliegende Erfindung bezieht sich auf eine Verstellvorrichtung für ein gemäss dem Oberbegriff von Anspruch 1.

### Stand der Technik

Derartige Vorrichtungen sind bereits in vielfältiger Form und Ausführung auf dem Markt bekannt und gebräuchlich. So beschreibt die DE 10 2008055472 A1 verwiesen. Dort ist ein Spindelantrieb beschrieben, wobei die Spindel eine Axialverschiebung erzeugt und ein Mitnehmer das Bauteil schwenkt. Nachteilig hierbei ist der Umstand, dass Spindelantriebe grundsätzlich asymmetrisch aufgebaut sind und dadurch eine ungleichmässige Belastung der Achse erfolgt. Ausserdem ist ein platzsparender kompakter Aufbau bei Spindelantrieben nicht möglich.

Daneben ist aus der EP 1998042 A1 ein Schneckenantrieb bekannt. Dort dreht ein Motor die Schnecke, welche wiederum Zahnräder um eine senkrechte Achse antreibt. Nachteilig hierbei ist wiederum der Umstand, dass Schneckenantriebe grundsätzlich asymmetrisch zur Bauteileachse ausgebildet sind und dadurch eine kompakte und platzsparende Bauform nicht möglich ist.

### Aufgabe der Erfindung

Aufgabe der vorliegenden Erfindung ist es, eine Verstellvorrichtung der oben genannten Art zu schaffen, welche die Nachteile aus dem Stand der Technik beseitigt und einen einfachen, leicht zu bedienenden Aufbau aufweist, kostengünstig in der Herstellung und platzsparend anzuordnen ist.

### Lösung der Aufgabe

Zur Lösung der Aufgabe führen die Merkmale des Anspruchs 1.

Die Verstellvorrichtung weist einen Motor als Antrieb, einen Stator sowie einen Rotor in einer uniaxialen Bauweise auf. Dies hat zur Folge, dass noch weniger Bauraum benötigt wird, um die positiven Vorteile der Erfindung zu nutzen. Der uniaxiale Aufbau dieser Verstellvorrichtung erlaubt ferner einen sehr kompakten Aufbau von Getriebe und Schwenkantrieb, die bei Bedarf in andere Baukomponenten integriert werden können.

Generell ist als Antrieb einer solchen Verstellvorrichtung der Antrieb zu verstehen, welcher benötigt wird, um über die Verstellvorrichtung ein weiteres Bauteil verstellen bzw. verschwenken können. Als Bauteil kommen hier beispielsweise Rotorblätter, Ruderblätter, Solarspiegel, Türflügel, Türen von Autos oder Gebäuden, Verstellung von Betten oder Teilen der Liegefläche eines Betts oder dergleichen in Betracht. Grundsätzlich kann eine erfindungsgemässe Verstellvorrichtung überall dort eingesetzt werden, wo eine in der Achse erforderliche Drehbewegung stattfindet. Die Energie zum Antreiben der Verstellvorrichtung und damit zur Verstellung des Bauteils wird von dem Antrieb zur Verfügung gestellt. Der Antrieb ist bevorzugt ein Elektromotor. Denkbar sind aber auch andere Antriebe, welche ausreichend Energie erzeugen können, die Verstellvorrichtung antreiben zu können.

Die Verstellvorrichtung dient der Übertragung der Energie des Antriebs auf den Rotor, relativ zu dem Stator.

In einem bevorzugten Ausführungsbeispiel ist die Verstellvorrichtung mit Stator und Rotor uniaxial aufgebaut. Eine uniaxiale Anordnung bedeutet in diesem Zusammenhang, dass die Verstellvorrichtung, der Stator, der Rotor und der Antrieb auf derselben Ebene anschliessend aneinander aufgebaut sind. Folglich bilden sie einen einachsigen Aufbau. Uniaxial bezeichnet eine Orientierung der Verstellvorrichtung, des Stators, des Rotors und des Antriebs an einer ungebrochenen Linie und dies ist beispielsweise in Achsrichtung, längsachsig oder achsrecht bezeichnebar. Vorliegend erfolgt die Ausrichtung entlang der Antriebsachse bzw. der Schwenkachse.

Die Verstellvorrichtung kann mit einem Drehgleitelement mit zumindest zwei Drehgleitgewinden versehen sein, die über ein Aussengewinde mit einem Innengewinde in einer Hülse des Stators und des Rotors in Wirkverbindung stehen. Über eine Spindelstange, welche mit dem Motor verbunden ist, werden die Drehgleitgewinde angetrieben und bewegt, wodurch sich über die Wirkverbindung auch der Stator und der Rotor drehen und so ein Verschwenken des Bauteils erfolgen kann.

In einem bevorzugten Ausführungsbeispiel der vorliegenden Erfindung ist ein Drehgleitelement vorgesehen, welches über ein Innengewinde mit der Spindelstange selbst in Wirkverbindung steht. Das Drehgleitelement ist mit zumindest einer Drehgleitführungsnut versehen, in der zumindest ein Drehgleitführungselement geführt ist, das wiederum an einer dem Drehgleitelement zugewandten Innenseite der Hülsen des Stators und des Rotors angeordnet ist. Die Hülsen von Stator und Rotor sind ansonsten innen glatt und ohne Nuten. Bevorzugt ist sowohl der Stator als auch der Rotor mit jeweils einem Drehgleitführungselement versehen, welche wiederum jedes für sich mit einer entsprechenden Drehgleitführungsnut des Drehgleitelementes in Wirkverbindung stehen.

Die Drehgleitführungsnuten sind in Form einer Langnut in eine der Innenseite der Hülsen zugewandten Oberfläche des Drehgleitelements eingelassen, sind jedoch nicht bis zu dem Gewinde des Drehgleitelementes durchgebrochen. Durch die Wirkverbindung zwischen Innengewinde des Drehgleitelementes und Aussengewinde der Spindelstange kann das Drehgleitelement auf der Spindelstange axial entlang der Antriebs- bzw. Schwenkachse verschoben werden.

Die Steigung der wendelförmig bzw. schraubenförmig verlaufenden Drehgleitführungsnuten kann unterschiedlich sein. Wird das Drehgleitelement axial entlang der Antriebs- bzw. Schwenkachse bzw. der Spindelstange verschoben, so bedeutet dies eine unterschiedliche Drehung des Stators und des Rotors um die Antriebs- bzw. Schwenkachse. Folglich verdreht sich der Rotor relativ zum Stator um den Differenzwinkel der Drehgleitführungsnuten zueinander bzw. voneinander weg. Wenn die beiden Drehgleitführungsnuten gleichsinnig sind, aber unterschiedlich steigend verlaufen, ist es die Differenz der Winkel. Bei gegensinniger Drehrichtung der Drehgleitführungsnuten ist es die Summe der Winkel.

Im Grunde können die Drehgleitführungsnuten jede beliebige Form haben und auch durchgehend unregelmässig kurvig sein. Der Relativwinkel resultiert immer aus dem Differenzwinkel. Die Position des Drehgleitelementes wird durch die Spindelstange eingestellt bzw. durch den Motor, der die Spindelstange um die Antriebs- bzw. Schwenkachse dreht und dabei das Drehgleitelement entlang dieser Antriebs- bzw. Schwenkachse verschiebt.

Die Verstellvorrichtung schwenkt mit Antrieb des Motors das am Rotor befestigte Bauteil um einen definierten Winkelbereich, beispielsweise um plus minus 90 Grad. Die Verstellvorrichtung wandelt dabei schnelle Motordrehungen um die Antriebsachse in langsame Bewegungen einer Schwenkachse um, wobei bauartbedingt die Antriebsachse und die Schwenkachse zumindest fast, vorliegend jedoch ganz zusammenfallen und meist identisch sind.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Schnittansicht einer erfindungsgemässen Verstellvorrichtung;
Figur 2 eine schematische Schnittansicht eines weiteren Ausführungsbeispiels einer erfindungsgemässen Verstellvorrichtung;
Figur 3 eine Schnittdarstellung eines weiteren Ausführungsbeispiels einer erfindungsgemässen Verstellvorrichtung;
Figur 4 eine Schnittdarstellung der erfindungsgemässen Verstellvorrichtung nach Figur 3 entlang der Linie IV - IV; und
Figur 5 eine Darstellung alternativer Geometrien für Drehgleitelemente.

### Ausführungsbeispiele

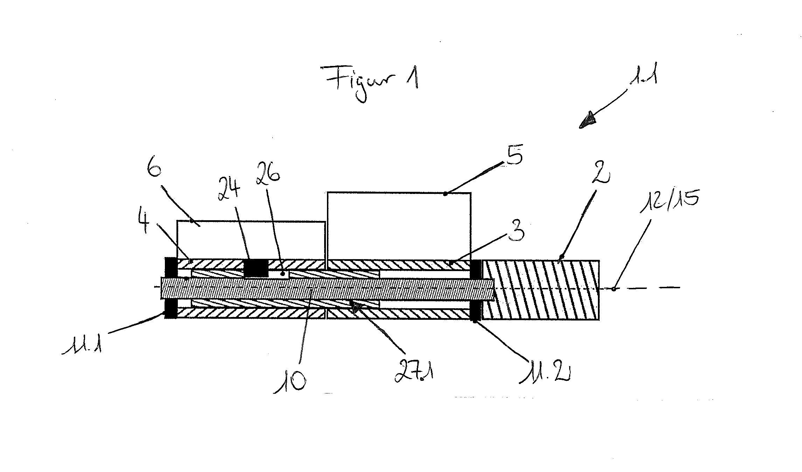

Gemäss Figur 1 ist eine Verstellvorrichtung 1.1 gezeigt. Diese Verstellvorrichtung 1.1 weist einen Motor 2, einen Stator 3 sowie einen Rotor 4. Dort ist ein Drehgleitelement 27.1 gezeigt. Daneben ist ein Drehgleitführungselement 24 und eine Drehgleitführungsnut 26 gezeigt. Der Rotor 4 ist hierbei innenseitig glatt und hat keine Drallnuten. Der Rotor 4 trägt oder hat das Drehgleitführungselement 24 auf einer Innenseite, d.h. der dem Drehgleitelement 27.1 zugewandten Seite.

Eine Spindelstange 10 ist einends durch eine Spindelmutter 11.2 mit dem Motor 2 verbunden und andernends in einer Spindelmutter 11.1 gelagert. Der Motor 2 treibt die Spindelstange 10 in den Spindelmuttern 11.1, 11.2 an. Die Spindelstange 10 steht in Wirkverbindung mit dem Drehgleitelement 27.1 und somit mit dem Stator 3 und dem Rotor 4. Die Spindelstange 10 dreht um eine Längs- bzw. Antriebsachse 12. Das Drehgleitelement 27.1 ist dabei entlang dieser Antriebsachse 12 verschiebbar oder optional auch um diese drehbar.

Der Stator 3 umfasst hierbei ein optional ortsfest montierbares Befestigungsteil 5 und der Rotor 4 ein bevorzugt um die Antriebsachse 12 beweglich angeordnetes Bauteil 6. Beispielsweise können das Befestigungsteil 5 und das Bauteil 6 einen Beschlag bilden.

Die Verstellvorrichtung 1.1 schwenkt mit Antrieb des Motors 2 das am Rotor 4 befestigte Bauteil 6 um einen definierten Winkelbereich, beispielsweise um plus minus 90 Grad. Die Verstellvorrichtung 1.1 wandelt dabei schnelle Motordrehungen um die Antriebsachse 12 in langsame Bewegungen einer Schwenkachse 15 um, wobei bauartbedingt die Antriebsachse 12 und die Schwenkachse 15 zumindest fast, vorliegend jedoch ganz zusammenfallen und meist identisch sind.

Der uniaxiale Aufbau dieser Verstellvorrichtung 1.1 erlaubt einen sehr kompakten Aufbau von Getriebe und Schwenkantrieb, die bei Bedarf in andere Baukomponenten integriert werden können.

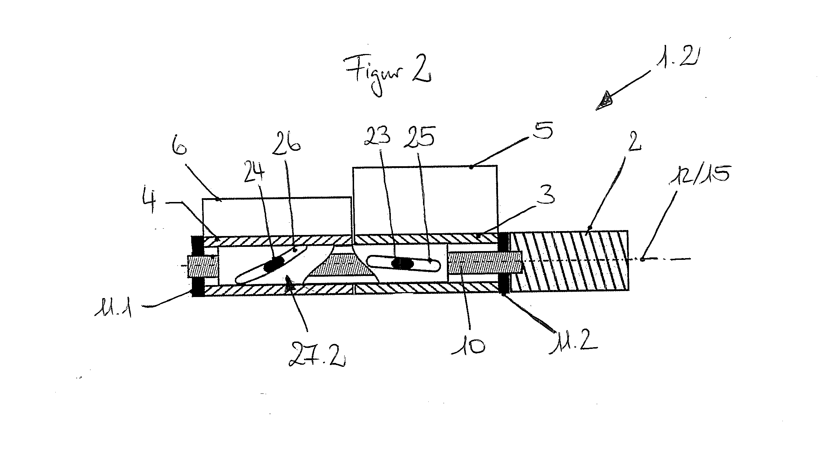

In Figur 2 ist ein weiteres Ausführungsbeispiel einer erfindungsgemässen Verstellvorrichtung 1.2 gezeigt. Neben den in Figur 1 bereits beschriebenen Merkmalen weist das hier gezeigte Drehgleitführungselement 27.2 ein weiteres Drehgleitführungselement 23 sowie zugehörige Drehgleitführungsnuten 25 auf. Ansonsten gelten die Ausführungen zu Figur 1 auch zu Figur 2. Dies insbesondere dann, wenn die gleichen Merkmale mit den gleichen Bezugsziffern versehen wurden. Daher wird auf eine Wiederholung aller in Figur 1 beschriebenen Merkmale verzichtet.

Die Drehgleitführungsnut 26 weist hierbei eine andere Steigung als die Drehgleitführungsnut 25 auf. Wird nun das Drehgleitelement 27.2 axial entlang der Antriebsachse 12 verschoben, so führt dies zu unterschiedlichen Drehungen der Antriebsachse 12 für den Stator 3 und den Rotor 4. Dies ergibt sich aus den unterschiedlichen Steigungen der wendel- bzw. schraubenförmig verlaufenden Drehgleitführungsnuten 25 bzw. 26. Folglich verdreht sich der Rotor 4 relativ zum Stator 3 um den Differenzwinkel der beiden Drehgleitführungsnuten 25 und 26. Wenn die beiden Drehgleitführungsnuten 25 und 26 gleichsinnig, aber unterschiedlich steigend verlaufen, so ist es die Differenz der Winkel. Bei gegensinniger Drehrichtung der Drehgleitführungsnuten 25 und 26 ist die Summe der Winkel entscheidend.

In Figur 2 haben beide Drehgleitführungsnuten 25 und 26 eine gegensinnige und zudem unterschiedlich steile Steigung. Hierbei können die Drehgleitführungsnuten 25 und 26 jede beliebige Form haben. Dies beinhaltet auch eine durchgehend unregelmässige und kurvige Form. Der Relativwinkel resultiert immer aus dem Differenzwinkel. Die Position des Drehgleitelements 27.2 wird durch die Spindelstange 10 eingestellt. Beispielsweise treibt hierzu der Motor 2 die Spindelstange 10 um die Antriebsachse 12 an und dreht dabei das Drehgleitelement 27.2 derart, dass es zu einer Verschiebung des Drehgleitelements 27.2 entlang der Antriebsachse 12 kommt. Bei unregelmässiger Steigung der Drehgleitführungsnuten 25 und 26 werden bevorzugt kurze Führungen oder Stifte als Drehgleitführungselemente 23 und 24 verwendet.

In einem bevorzugten Ausführungsbeispiel können die Drehgleitführungsnuten 25 und 26 derart unterschiedlich ausgebildet sein, dass die eine Drehgleitführungsnut 26 helikal und die andere Drehgleitführungsnut 25 achsparallel angeordnet ist.

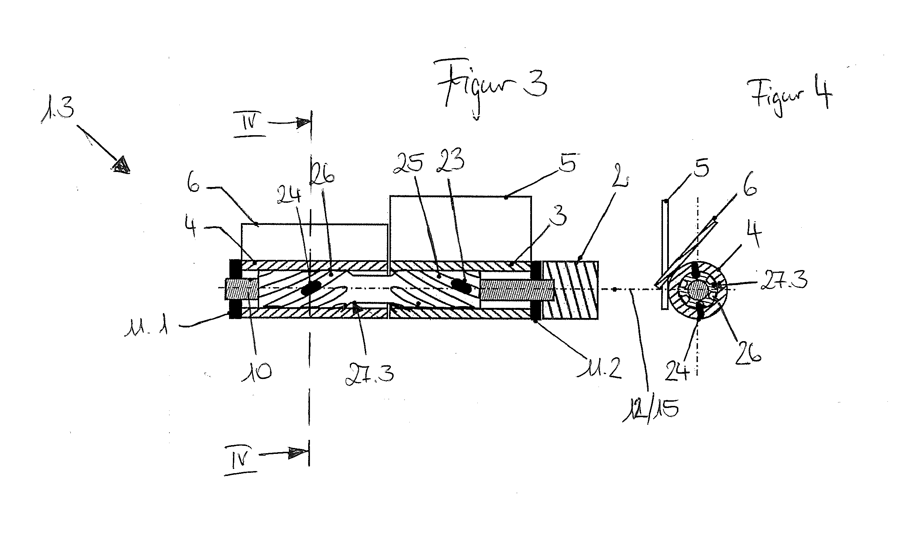

In Figur 3 ein weiteres Ausführungsbeispiel einer Verstellvorrichtung 1.3 gezeigt. Dort ist das Drehgleitelement 27.3 mit einer symmetrischen Anordnung von Drehgleitführungsnuten 25 und 26 versehen. Die Drehgleitführungsnuten 25 und 26 winden sich auf der Oberfläche des Drehgleitelementes 27.3 eingesenkt helikal um die Antriebsachse 12. Das Drehgleitelement 27.3 weist innen eine nicht näher gezeigte Spindelgewindebohrung auf, welche passend zur Spindelstange 10 ausgeführt ist. Die Drehrichtung der Drehgleitführungsnut 26 im Bereich des Rotors 4 ist entgegengesetzt zu der Drehrichtung der Drehgleitführungsnut 25 im Bereich des Stators 3.

Figur 4 zeigt eine Schnittansicht durch Figur 3 entlang der Linie IV - IV. Dort ist gezeigt, wie das Bauteil 6 zu dem Befestigungsteil 5 um die Antriebsachse 12 geschwenkt werden kann. Hier ist gut zu erkennen, wie ein Rohrelement des Rotors 4 innen glatt ausgebildet ist. Der Rotor 4 und das daran befestigte Bauteil 6 sind gegenüber dem Stator 3 und dem Befestigungsteil 5 verdreht angeordnet. Die Drehgleitführungselemente 23 und 24 greifen hierbei in die Drehgleitführungsnuten 25, 26ein, wobei in der Figur 4 mehr Drehgleitführungsnuten gezeigt sind, Drehgleitführungselemente vorhanden sind.

Der Drehwinkel zwischen dem Bauteil 6 und dem Befestigungsteil 5 ändert sich bei axialer Verschiebung des Drehgleitelements 27.3. Diese Verschiebung des Drehgleitelements 27.3. wird im hier gezeigten Ausführungsbeispiel durch Drehen der Spindelstange 10 erzeugt.

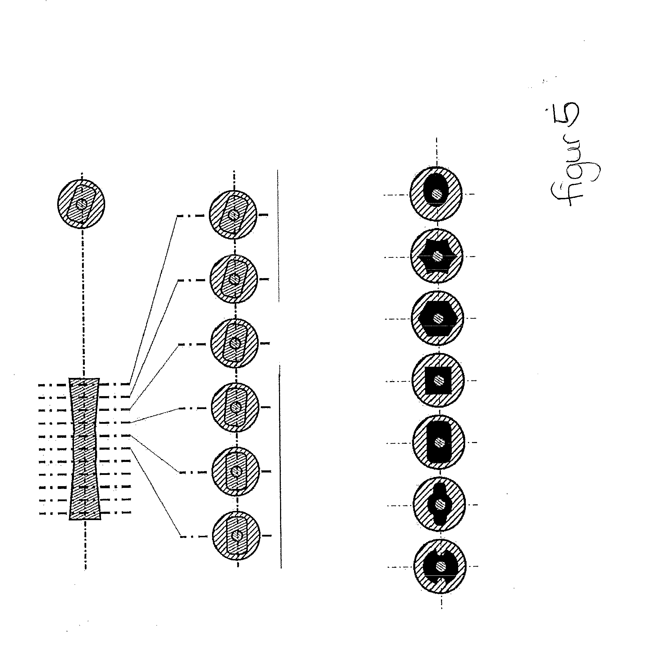

In Figur 5 ist eine Darstellung alternativer Geometrien für Drehgleitelemente gezeigt.

| **Bezugszeichenliste** | | | | | |
|---|---|---|---|---|---|
| 1 | Verstellvorrichtung | 34 | | 67 | |
| 2 | Motor | 35 | | 68 | |
| 3 | Stator | 36 | | 69 | |
| 4 | Rotor | 37 | | 70 | |
| 5 | Befestigungsteil | 38 | | 71 | |
| 6 | Bauteil | 39 | | 72 | |
| 7 | | 40 | | 73 | |
| 8 | | 41 | | 74 | |
| 9 | | 42 | | 75 | |
| 10 | Spindelstange | 43 | | 76 | |
| 11 | Spindelmutter | 44 | | 77 | |
| 12 | Antriebsachse | 45 | | 78 | |
| 13 | | 46 | | 79 | |
| 14 | | 47 | | | |
| 15 | Schwenkachse | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | Drehgleitführungselem. | 56 | | | |
| 24 | Drehgleitführungselem. | 57 | | | |
| 25 | Drehgleitführungsnut | 58 | | | |
| 26 | Drehgleitführungsnut | 59 | | | |
| 27 | Drehgleitelement | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verstellvorrichtung mit einem Motor (2), einem Stator (3) und einem Rotor (4) sowie einem zwischen dem Stator (3) und dem Rotor (4) angeordnetes Drehgleitelement (27.1, 27.2, 27.3),
**dadurch gekennzeichnet**,
das Drehgleitelement (27.1, 27.2, 27.3) zumindest ein Drehgleitführungselement (23, 24) umfasst, welches auf einer dem Drehgleitelement (27.1, 27.2, 27.3) zugewandten Innenseite des Stators (3) und/oder Rotors (4) angeordnet ist und in zumindest einer Drehgleitführungsnut (25, 26) geführt ist, welche auf einer der Innenseite des Stators (3) und/oder Rotors (4) zugewandten Oberfläche des Drehgleitelementes (27.1, 27.2, 27.3) eingebracht ist.

2. Verstellvorrichtung nach Anspruch, **dadurch gekennzeichnet, dass** der Motor (2), der Stator (3), der Rotor (4) und das Drehgleitelement (27.1, 27.2, 27.3) uniaxial angeordnet sind.

3. Verstellvorrichtung nach einem der Ansprüche 1 oder 2, **dadurch gekennzeichnet, dass** eine Spindelstange (10) zur Übertragung der Antriebskraft von dem Motor (2) auf das Drehgleitelement (27.1, 27.2, 27.3) vorgesehen ist.

4. Verstellvorrichtung nach einem der Ansprüche 1 bis 3, **dadurch gekennzeichnet, dass** die Drehgleitführungsnuten (25, 26) wendelförmig oder schraubenförmig verlaufen.

5. Verstellvorrichtung nach einem der Ansprüche 1 bis 4, **dadurch gekennzeichnet, dass** die Steigungen der Drehgleitführungsnuten (25, 26) unterschiedlich sind.

6. Verstellvorrichtung nach einem der Ansprüche 1 bis 5, **dadurch gekennzeichnet, dass** das eine Drehgleitführungselement (23) in dem Stator (3) angeordnet ist.

7. Verstellvorrichtung nach einem der Ansprüche 1 bis 5, **dadurch gekennzeichnet, dass** das andere Drehgleitführungselement (24) in dem Rotor (4) angeordnet ist.
